# EUROPEAN PATENT APPLICATION

(11) **EP 4 282 685 A1**
(43) Date of publication of application: **29.11.2023**
(21) Application number: 23173306.4
(22) Date of filing: 15.05.2023
(51) Int. Cl.: B60K 35/00, B60K 37/06, G06F 3/0482, G09G 3/00

(54) **VEHICLE DISPLAY DEVICE**

(30) Priority: 18.05.2022 JP 2022081751
(71) Applicant: Yazaki Corporation, Tokyo 108-0075 (JP)
(72) Inventor: Asakura, Junichi, Shizuoka, 421-0407 (JP)
(74) Representative: Grünecker Patent- und Rechtsanwälte PartG mbB

(57) **Abstract**

A first image signal generation device (20) receives a first command signal from a display control device (50) and then transmits an icon image signal for displaying an icon image (PI) to a combining device (42). The combining device (42) controls to display the icon image (PI) on a liquid crystal display (10) based on the icon image signal transmitted from the first image signal generation device (20). In the superimposition display control, the first image signal generation device (20), the second image signal generation device (41), the combining device (42), and the display control device (50) controls to display the superimposed image (PS) on the liquid crystal display (10), the superimposed image (PS) being an image in which a first image (P) and a second image (Q) are synchronized with each other, based on a detection result of the icon image (PI) displayed on the display unit (10).

## Description

### BACKGROUND OF THE INVENTION

### 1. Field of the Invention

The present invention relates to a vehicle display device.

### 2. Description of the Related Art

As an example of conventional technologies of a vehicle display device, Japanese Patent Application Laid-open No. 7-107408 describes a single-chip microcomputer incorporating a screen display device that performs control for simultaneously displaying, on a display, a plurality of display tasks to be processed asynchronously. The single-chip microcomputer includes: a plurality of screen display devices; a control means of independently controlling the screen display devices; and a mixing means of mixing output signals from the screen display devices.

Meanwhile, the single-chip microcomputer described in Japanese Patent Application Laid-open No. 7-107408 described above has room for improvement in that, for example, when a plurality of screen display devices includes a first screen display device that needs a preparation period that varies in accordance with a processing load when displaying an image and a second screen display device that can display an image at a predetermined timing regardless of the processing load, the image displayed by the first screen display device and the image displayed by the second screen display device are displayed in synchronization with each other.

### SUMMARY OF THE INVENTION

The present invention has been made in view of the above and aims to provide a vehicle display device capable of appropriately displaying an image.

In order to achieve the above mentioned object, a vehicle display device according to one aspect of the present invention includes a display unit that is installed on a vehicle and displays an image; a first image signal generation unit that generates a first image signal for displaying a first image and that needs a preparation period that varies in accordance with a processing load when generating the first image signal; a second image signal generation unit that generates a second image signal for displaying a second image; a display control unit that performs superimposition display control of displaying, on the display unit, a superimposed image obtained by superimposing the second image on the first image based on the first image signal generated by the first image signal generation unit and the second image signal generated by the second image signal generation unit; and a control unit that controls the first image signal generation unit and the second image signal generation unit to achieve synchronization between the first image and the second image, wherein the control unit transmits a first command signal to the first image signal generation unit when causing the display control unit to execute the superimposition display control, the first image signal generation unit receives the first command signal from the control unit and then transmits an icon image signal for displaying an icon image to the display control unit, the display control unit controls to display, on the display unit, the icon image based on the icon image signal transmitted from the first image signal generation unit, and the first image signal generation unit, the second image signal generation unit, the display control unit, and the control unit control to display, on the display unit, the superimposed image in which the first image according to the first image signal generated by the first image signal generation unit and the second image according to the second image signal generated by the second image signal generation unit are synchronized with each other in the superimposition display control based on a detection result of the icon image displayed on the display unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of a graphics-based meter according to an embodiment;
FIG. 2 is a view illustrating a display switching example of a first image and a second image according to the embodiment;
FIG. 3 is a timing chart illustrating operation timings of a display control device and the first image signal generation device according to the embodiment;
FIG. 4 is a sequence chart illustrating an operation example of the graphics-based meter according to the embodiment; and
FIG. 5 is a view illustrating an example of an icon image according to a modification of the embodiment.

### DETAILED DESCRIPTION OF THE PREFERRED EMBODIMENTS

A mode (an embodiment) for carrying out the present invention will be described in detail with reference to the drawings. The present invention is not limited to the description in the following embodiments. In addition, the components described below include those that can be easily assumed by those skilled in the art and those that are substantially the same. Furthermore, the configurations described below can be combined as appropriate. In addition, various omissions, substitutions or alterations of the configuration can be made without departing from the scope and the spirit of the present invention.

### Embodiment

A graphics-based meter 1 provided as a vehicle display device according to an embodiment will be described with reference to the drawings. The graphics-based meter 1 is installed on a vehicle and is assembled to an instrument panel of the vehicle in a state of being visually recognizable from an occupant (driver) seated on a driver's seat of the vehicle. The graphics-based meter 1 displays a graphical image regarding information related to traveling of the vehicle, such as a traveling speed of the vehicle, engine speed as revolutions per unit time, the amount of remaining fuel, and tell-tales being lights as warning indicators. The graphics-based meter 1 according to the embodiment implements, for example, a superimposition display in which a second image Q (On-Screen Display (OSD) image) is superimposed on a first image P generated by a rich OS such as Linux (registered trademark) or Android (registered trademark) with appropriate synchronization of the first image P and the second image Q. Hereinafter, the graphics-based meter 1 will be described in detail.

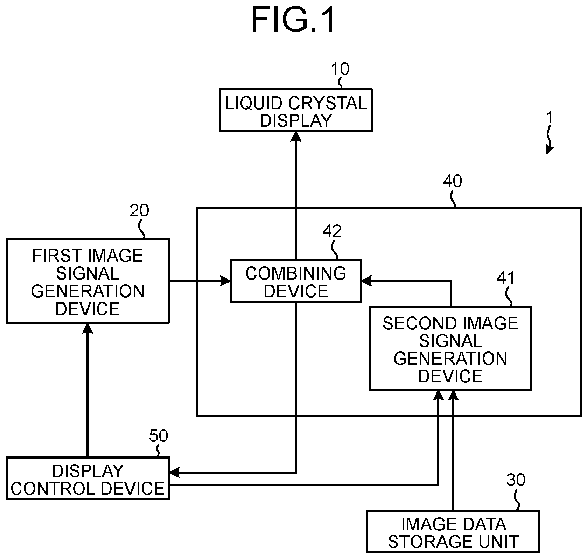

As illustrated in FIG. 1, the graphics-based meter 1 includes a liquid crystal display 10 as a display unit, a first image signal generation device 20 as a first image signal generation unit, an image data storage unit 30, an OSD chip 40, and a display control device 50 as a control unit.

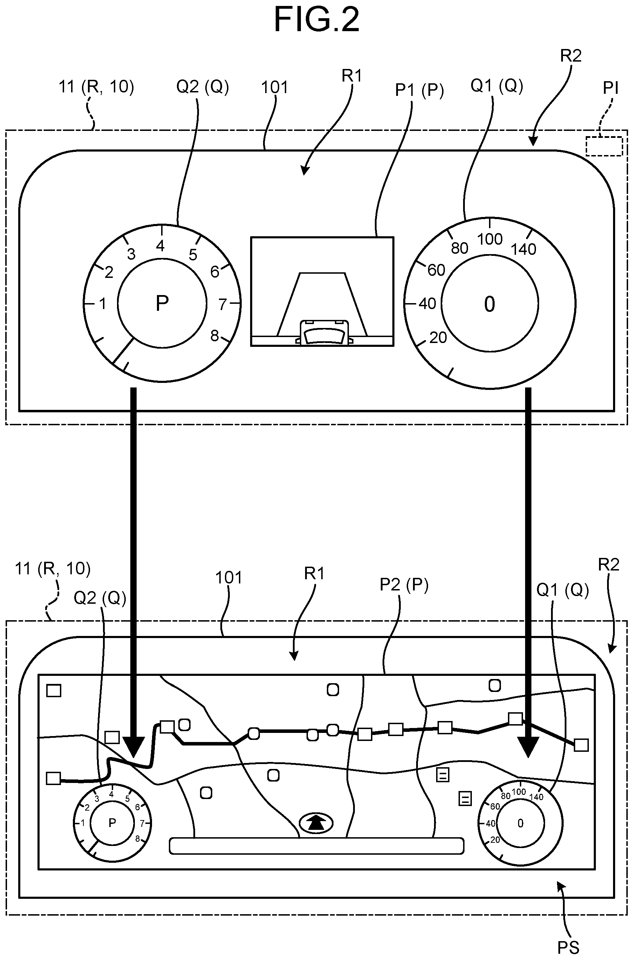

The liquid crystal display 10 is a display that displays an image. As illustrated in FIG. 2, the liquid crystal display 10 includes: a liquid crystal panel 11 that displays an image; and a backlight (not illustrated) that is provided on a back surface of the liquid crystal panel 11 and emits light. The liquid crystal panel 11 is formed in a rectangular shape and has a rectangular image display region R that displays an image. The liquid crystal panel 11 has a configuration in which a part of the outer side of the image display region R is covered by a cover plate 101 provided in the vehicle, and the inner side portion of the image display region R is exposed to be visible from the occupant. That is, the image display region R includes: a visible region R1 which is an inner region exposed so as to be visible from the occupant; and an invisible region R2 which is an outer region covered by the cover plate 101 and invisible from the occupant. The liquid crystal display 10 is connected to the OSD chip 40, and displays an image in the image display region R under the display control by the OSD chip 40. The liquid crystal display 10 displays, in the visible region R1, information related to traveling of the vehicle, such as a traveling speed of the vehicle, an engine speed as revolutions per unit time, driving assist information for assisting driving, and map information (navigation information) indicating a traveling point. The liquid crystal display 10 displays an icon image PI in the invisible region R2. Here, the icon image PI is an image used when the first image P and the second image Q are synchronized with each other when the second image Q is to be displayed on the first image P with superimposition display. The icon image PI is, for example, a trigger image indicating completion of preparation for generating a first image signal sg9 by a first image signal generation device 20 to be described below, and is formed in a shape such as a heart shape and a star shape.

Next, the first image signal generation device 20 will be described. The first image signal generation device 20 is a device that operates on a rich OS, and includes an electronic circuit mainly using a known microcomputer including a CPU, ROM and RAM constituting a storage unit, and an interface. Here, the rich OS is an operating system such as Linux (registered trademark) or Android (registered trademark), and is capable of generating enriched content such as map information or driving assist information. The first image signal generation device 20 is connected to the display control device 50 and the OSD chip 40, generates the first image signal sg9 for displaying the first image P, which is enriched content, based on a command from the display control device 50, and transmits the first image signal sg9 to the OSD chip 40. In this example, the first image P being enriched content is a moving image obtained by collecting a plurality of frames of still images. Here, when generating the first image signal sg9 for displaying the first image P, the first image signal generation device 20 needs a preparation period that varies in accordance with the processing load. For example, a plurality of applications has been simultaneously started up in the first image signal generation device 20. Therefore, when it is desired to execute a specific application (for example, processing of displaying map information), there is a need to perform adjustment of releasing resources of an application used by another application to secure resources for executing the specific application. Due to the need of this adjustment, the first image signal generation device 20 needs a preparation period that varies in accordance with a processing load when executing the specific application. Therefore, since it is difficult for the first image signal generation device 20 to generate the first image signal sg9 so as to enable the OSD chip 40 described below to generate a second image signal sg11 at a predetermined frame interval (frame rate: frames per second (fps)), the present embodiment implements synchronization between the first image P and the second image Q using the above-described icon image PI. For example, when the first image signal generation device 20 has successfully secured a resource for executing a specific application at the time of receiving a first command signal sg1 from the display control device 50 to be described below, the first image signal generation device 20 transmits, to the OSD chip 40, an icon image signal sg2 for displaying the icon image PI indicating the completion of preparation for generating the first image signal sg9. After a predetermined period has elapsed from the generation of the icon image signal sg2, the first image signal generation device 20 transmits the first image signal sg9 to the OSD chip 40. That is, the first image signal generation device 20 transmits the first image signal sg9 to the OSD chip 40 at a timing of performing superimposition display of the first image P and the second image Q in synchronization. Furthermore, after detecting the icon image PI by the OSD chip 40 to be described below, the first image signal generation device 20 transmits a non-display signal sg6 for hiding the icon image PI displayed on the liquid crystal display 10 to the OSD chip 40, thereby hiding the icon image PI which has been detected by the OSD chip 40 to be described below and now becomes unneeded.

Next, the image data storage unit 30 will be described. The image data storage unit 30 stores image rendering data for the rendering of an image by using the OSD chip 40, and includes volatile memory such as RAM and nonvolatile memory such as ROM, flash memory, and a hard disk. The image data storage unit 30 stores image rendering data (legal information) related to traveling of the vehicle, such as a traveling speed of the vehicle, engine speed as revolutions per unit time, the amount of remaining fuel, and tell-tales being lights as warning indicators. The image data storage unit 30 is connected to the OSD chip 40, and image rendering data is read by the OSD chip 40.

Next, the OSD chip 40 will be described. The OSD chip 40 includes: a second image signal generation device 41 as a second image signal generation unit; and a combining device 42 as a display control unit.

The second image signal generation device 41 generates the second image signal sg11 for displaying the second image Q to be superimposed on the first image P based on the image rendering data read from the image data storage unit 30. The second image signal generation device 41 includes an electronic circuit mainly using a known microcomputer including a CPU, a storage unit, and an interface. The second image signal generation device 41 is connected to the display control device 50, the image data storage unit 30, and the combining device 42. The second image signal generation device 41 generates the second image signal sg11 for displaying the second image Q to be superimposed on the first image P based on a command from the display control device 50, and transmits the generated second image signal sg11 to the combining device 42. In this example, the second image Q is a moving image obtained by collecting a plurality of frames of still images. Here, the second image signal generation device 41 can generate the second image signal sg11 at a predetermined timing regardless of the processing load when generating the second image signal sg11 for displaying the second image Q. That is, unlike the first image signal generation device 20 described above, the second image signal generation device 41 does not need a preparation period that varies in accordance with the processing load when generating the second image signal sg11. That is, unlike the case of the first image signal generation device 20, the second image signal generation device 41 does not need to perform, when executing a specific application, adjustment for securing the resources for executing the specific application by releasing the resources of the application used in another application. This makes it possible for the second image signal generation device 41 to generate the second image signal sg11 at predetermined frame intervals. For example, the second image signal generation device 41 receives a second command signal sg10 from the display control device 50 at the timing of performing superimposition display of the first image P and the second image Q in synchronization, generates the second image signal sg11 and transmits the generated second image signal sg11 to the combining device 42.

Next, the combining device 42 will be described. The combining device 42 performs superimposition display control of the liquid crystal display 10, and includes an electronic circuit mainly using a known microcomputer including a CPU, a storage unit, and an interface. For example, the combining device 42 performs superimposition display control of displaying a superimposed image PS in which the second image Q is superimposed on the first image P on the liquid crystal display 10 based on the first image signal sg9 generated by the first image signal generation device 20 and the second image signal sg11 generated by the second image signal generation device 41. The combining device 42 is connected to the first image signal generation device 20, the liquid crystal display 10, the display control device 50, and the second image signal generation device 41. The combining device 42 controls to display the icon image PI on the liquid crystal display 10 based on the icon image signal sg2 transmitted from the first image signal generation device 20. When having detected the icon image PI displayed on the liquid crystal display 10, the combining device 42 transmits a detection result signal sg5 indicating a result of the detection to the display control device 50. For example, the combining device 42 includes an imaging unit (not illustrated) capable of capturing an image. The imaging unit constantly monitors a predetermined region in which the icon image PI is displayed in the invisible region R2 of the liquid crystal display 10. For example, the imaging unit detects the icon image PI based on the shape (for example, a heart shape) of the icon image PI. When the icon image PI is displayed in a predetermined region of the invisible region R2, the imaging unit detects the icon image PI. When having detected the icon image PI by the imaging unit, the combining device 42 transmits the detection result signal sg5 indicating a result of the detection to the display control device 50.

Furthermore, after detecting the icon image PI by the imaging unit, the combining device 42 controls to hide the icon image PI displayed on the liquid crystal display 10 based on the non-display signal sg6 transmitted from the first image signal generation device 20. After hiding the icon image PI, the combining device 42 generates the superimposition image signal for displaying the superimposed image PS having the start frame of the first image P and the start frame of the second image Q aligned with each other based on the first image signal sg9 transmitted from the first image signal generation device 20 and the second image signal sg11 transmitted from the second image signal generation device 41. Subsequently, the combining device 42 controls to display the superimposed image PS on the liquid crystal display 10 based on the generated superimposition image signal. The combining device 42 displays the superimposed image PS having individual start frames aligned with each other on the liquid crystal display 10, and thereafter sequentially displays the superimposed image PS having individual frames next to the start frames aligned with each other on the liquid crystal display 10 based on the first image signal sg9 transmitted next from the first image signal generation device 20 and the second image signal sg11 transmitted next from the second image signal generation device 41. That is, after displaying the superimposed image PS in which the individual start frames are aligned with each other on the liquid crystal display 10, the combining device 42 controls to sequentially display the superimposed image PS in which the first image P and the second image Q are synchronized on the liquid crystal display 10 based on the first image signal sg9 sequentially transmitted from the first image signal generation device 20 and the second image signal sg11 sequentially transmitted from the second image signal generation device 41.

Next, the display control device 50 will be described. The display control device 50 controls the first image signal generation device 20 and the second image signal generation device 41 to perform control to synchronize the first image P and the second image Q. The display control device 50 includes an electronic circuit mainly using a known microcomputer including a CPU, a storage unit, and an interface. The display control device 50 is connected to the first image signal generation device 20, the second image signal generation device 41, and the combining device 42. In the execution of the superimposition display control by the combining device 42, the display control device 50 transmits the first command signal sg1 to the first image signal generation device 20 based on an operation instruction by an occupant, a scenario, or the like. Here, the scenario defines information such as the type and order of images to be displayed on the liquid crystal display 10. For example, the display control device 50 transmits the first command signal sg1 to the first image signal generation device 20, when switching from a first screen (driving assist image P1, traveling speed image Q1, engine speed image Q2) illustrated in FIG. 2 to a second screen (map image P2, traveling speed image Q1, engine speed image Q2) illustrated in FIG. 2 to execute the superimposition display control. In addition, the display control device 50 performs control such that, in response to reception of the detection result signal sg5 from the combining device 42, the second command signal sg10 is to be transmitted to the second image signal generation device 41, thereby transmitting the second image signal sg11 from the second image signal generation device 41 to the combining device 42.

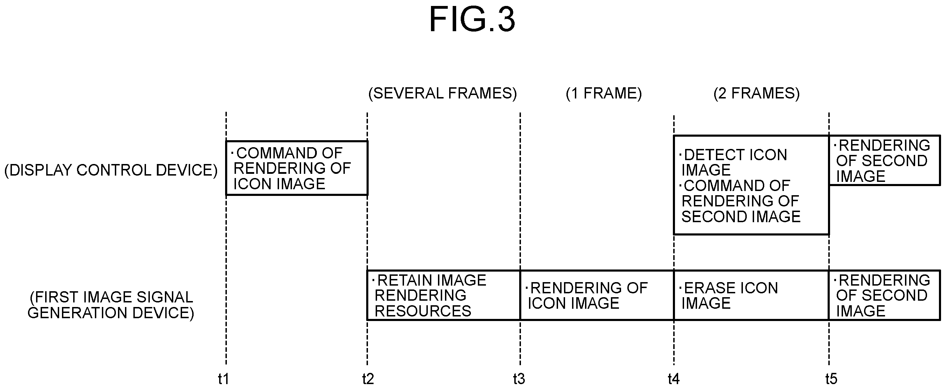

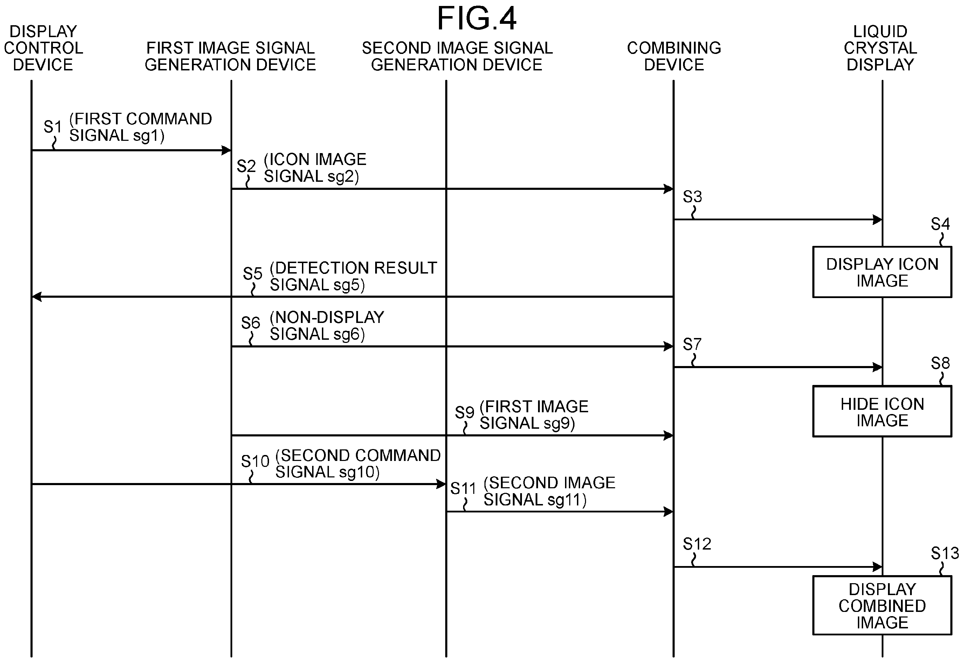

Next, an operation example of the graphics-based meter 1 will be described with reference to FIGS. 3 and 4. FIG. 3 is a timing chart illustrating operation timings of the display control device 50 and the first image signal generation device 20 according to the embodiment. FIG. 4 is a sequence chart illustrating an operation example of the graphics-based meter 1 according to the embodiment. For example, as illustrated in FIG. 4, in execution of the superimposition display control by the combining device 42, the display control device 50 transmits the first command signal sg1 to the first image signal generation device 20 (step S1: time point t1 illustrated in FIG. 3). Next, the first image signal generation device 20 receives the first command signal sg1 from the display control device 50, and after the lapse of the preparation period, the first image signal generation device 20 transmits the icon image signal sg2 for displaying the icon image PI to the combining device 42 (step S2, time point t3 illustrated in FIG. 3). At this time, the first image signal generation device 20 secures an image rendering resource between time points t2 and t3 (several frame intervals) illustrated in FIG. 3 as the preparation period, and performs image rendering of the icon image PI at one frame interval at time point t3. Next, the combining device 42 controls to display the icon image PI on the liquid crystal display 10 based on the icon image signal sg2 transmitted from the first image signal generation device 20 (steps S3 and S4). Next, when having detected the icon image PI displayed on the liquid crystal display 10 (time point t4 illustrated in FIG. 3), the combining device 42 transmits the detection result signal sg5 indicating a result of the detection to the display control device 50 (step S5). Next, after having detected the icon image PI by the combining device 42, the first image signal generation device 20 transmits the non-display signal sg6 for hiding the icon image PI displayed on the liquid crystal display 10 to the combining device 42 (step S6, time point t4 illustrated in FIG. 3). Next, the combining device 42 controls to hide the icon image PI displayed on the liquid crystal display 10 based on the non-display signal sg6 transmitted from the first image signal generation device 20 (steps S7 and S8). Next, after a predetermined period has elapsed from generation of the icon image signal sg2, the first image signal generation device 20 transmits the first image signal sg9 to the combining device 42 (step S9). Next, the display control device 50 receives the detection result signal sg5 from the combining device 42, and then transmits the second command signal sg10 to the second image signal generation device 41 (step S10, time point t4 illustrated in FIG. 3). Next, when having received the second command signal sg10 from the display control device 50, the second image signal generation device 41 generates a second image signal sg11 and transmits the generated second image signal sg11 to the combining device 42 (step S11). That is, in execution of the superimposition display control, the second image signal generation device 41 suspends transmission of the second image signal sg11 to the combining device 42 until the icon image PI is detected by the combining device 42 after the display control device 50 transmits the first command signal sg1 to the first image signal generation device 20. Here, the second image signal generation device 41 suspends transmission of the second image signal sg11 for performing image display of a partial specific region of the second image signal generation device 41 that needs to be synchronized with the first image signal generation device 20, and does not suspend transmission of the second image signal sg11 for performing entire image display of the second image signal generation devices 41. That is, the second image signal generation device 41 suspends the second image signal sg11 necessary for synchronization with the first image signal generation device 20, and does not suspend the second image signal sg11 unnecessary for synchronization with the first image signal generation device 20. Next, the combining device 42 generates the superimposition image signal for displaying the superimposed image PS having the start frame of the first image P and the start frame of the second image Q aligned with each other based on the first image signal sg9 transmitted from the first image signal generation device 20 and the second image signal sg11 transmitted from the second image signal generation device 41, and then controls to display the superimposed image PS on the liquid crystal display 10 based on the superimposition image signal (steps S12, S13, time point t5 illustrated in FIG. 3).

As described above, the graphics-based meter 1 according to the embodiment includes the liquid crystal display 10, the first image signal generation device 20, the second image signal generation device 41, the combining device 42, and the display control device 50. The liquid crystal display 10 is installed on a vehicle and displays an image. The first image signal generation device 20 generates the first image signal sg9 for displaying the first image P, and needs a preparation period that varies in accordance with a processing load when generating the first image signal sg9. The second image signal generation device 41 generates the second image signal sg11 for displaying the second image Q. The combining device 42 performs superimposition display control of displaying the superimposed image PS in which the second image Q is superimposed on the first image P on the liquid crystal display 10 based on the first image signal sg9 generated by the first image signal generation device 20 and the second image signal sg11 generated by the second image signal generation device 41. The display control device 50 controls the first image signal generation device 20 and the second image signal generation device 41 to perform control to synchronize the first image P and the second image Q. With such a configuration, the display control device 50 transmits the first command signal sg1 to the first image signal generation device 20 when executing the superimposition display control by the combining device 42. The first image signal generation device 20 receives the first command signal sg1 from the display control device 50, and then transmits the icon image signal sg2 for displaying the icon image PI to the combining device 42. The combining device 42 controls to display the icon image PI on the liquid crystal display 10 based on the icon image signal sg2 transmitted from the first image signal generation device 20. In the superimposition display control, the first image signal generation device 20, the second image signal generation device 41, the combining device 42, and the display control device 50 control to display the superimposed image PS on the liquid crystal display 10, the superimposed image PS being an image in which the first image P according to the first image signal sg9 generated by the first image signal generation device 20 and the second image Q according to the second image signal sg11 generated by the second image signal generation device 41 are synchronized with each other, based on the detection result of the icon image PI displayed on the liquid crystal display 10.

With this configuration, when executing the superimposition display control, the graphics-based meter 1 can display the superimposed image PS in which the first image P and the second image Q are synchronized with each other in a case where the preparation period varies in accordance with the processing load in generation of the first image P. This makes it possible for the graphics-based meter 1 to suppress misalignment in the display of the first image P and the second image Q, leading to achievement of appropriate display of the image.

In the graphics-based meter 1, each of the first image P and the second image Q is a moving image obtained by collecting a plurality of frames of still images. After a predetermined period has elapsed from generation of the icon image signal sg2, the first image signal generation device 20 transmits the first image signal sg9 to the combining device 42. The combining device 42 detects the icon image PI displayed on the liquid crystal display 10, and then transmits the detection result signal sg5 indicating a result of the detection to the display control device 50. The display control device 50 receives the detection result signal sg5 from the combining device 42, and then transmits the second command signal sg10 to the second image signal generation device 41. When having received the second command signal sg10 from the display control device 50, the second image signal generation device 41 generates the second image signal sg11 and transmits the generated second image signal sg11 to the combining device 42. The combining device 42 generates the superimposition image signal for displaying the superimposed image PS having the start frame of the first image P and the start frame of the second image Q aligned with each other based on the first image signal sg9 transmitted from the first image signal generation device 20 and the second image signal sg11 transmitted from the second image signal generation device 41, and controls to display the superimposed image PS on the liquid crystal display 10 based on the superimposition image signal. With this configuration, the graphics-based meter 1 can display the first image P being a moving image and the second image Q being a moving image in synchronization with each other having the start frame of the first image P and the start frame of the second image Q aligned with each other.

When the superimposition display control is executed by the combining device 42 in the graphics-based meter 1, the second image signal generation device 41 suspends transmission of the second image signal sg11 to the combining device 42 until the icon image PI is detected by the combining device 42 after the display control device 50 transmits the first command signal sg1 to the first image signal generation device 20. With this configuration, the graphics-based meter 1 can display the superimposed image PS in which the first image P and the second image Q are synchronized with each other.

After having detected the icon image PI by the combining device 42 in the graphics-based meter 1, the first image signal generation device 20 transmits the non-display signal sg6 for hiding the icon image PI displayed on the liquid crystal display 10 to the combining device 42. The combining device 42 controls to hide the icon image PI displayed on the liquid crystal display 10 based on the non-display signal sg6 transmitted from the first image signal generation device 20. With this configuration, the graphics-based meter 1 can erase the icon image PI used in the previous superimposition display control, leading to appropriate execution of the superimposition display control by the combining device 42.

In the graphics-based meter 1, the liquid crystal display 10 displays the icon image PI in the invisible region R2 which is invisible from the occupant of the vehicle and existing in the image display region R that displays the image. With this configuration, the graphics-based meter 1 can prevent the icon image PI from interfering with the display when displaying the information related to the traveling of the vehicle in the image display region R.

### Modification

The above has described an example in which the first image P and the second image Q are moving images obtained by collecting a plurality of frames of still images. However, the type of image is not limited thereto and for example, the first image P and the second image Q may be still images instead of moving images.

The above has described an example in which the liquid crystal display 10 displays the icon image PI in the invisible region R2 that is invisible from the occupant of the vehicle in the image display region R for displaying an image. However, the display region is not limited thereto, and the icon image PI may be displayed in the visible region R1 that is visible from the occupant of the vehicle.

The above has described an example in which the display unit is the liquid crystal display 10. However, the type of display unit is not limited thereto, and for example, the display unit may be another type of display unit such as an organic EL.

The above has described an example in which the rich OS is Linux (registered trademark), Android (registered trademark), or the like. However, the type of rich OS is not limited thereto, and may be another rich OS such as Windows (registered trademark), iOS (registered trademark), or the like.

The above has described an example in which the icon image PI is formed in a shape such as a heart shape and a star shape. However, the shape of the icon image PI is not limited thereto, and may be another shape such as a barcode shape. In the case of the barcode shape, the combining device 42 detects the icon image PI having the barcode shape based on the brightness. Furthermore, the combining device 42 may detect the predetermined icon image PI based on saturation, a cyclic redundancy check (CRC), or the like.

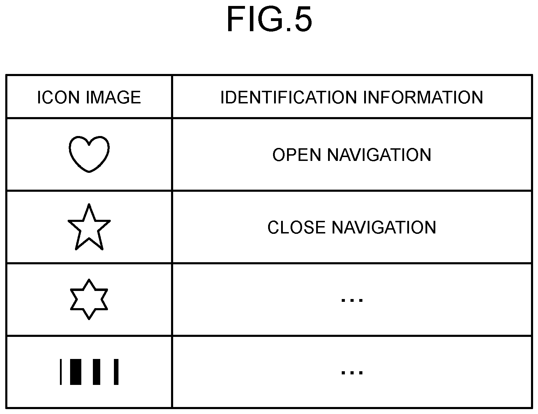

Although the above has described an example in which the display control device 50 grasps the type of the image displayed on the liquid crystal display 10 based on a scenario, the present invention is not limited thereto. For example, the display control device 50 may not grasp the type of the image displayed on the liquid crystal display 10. In this case, the icon image PI varies in accordance with the message of the superimposed image PS to be displayed on the liquid crystal display 10 by the superimposition display control. For example, as illustrated in FIG. 5, the icon image PI has a heart shape when it has a message "open navigation", and has a star shape when it has a message "close navigation". In addition, in the use of the icon image PI that varies in accordance with the message of the superimposed image PS, an identification result of the message of the superimposed image PS identified based on the icon image PI by the display control device 50 is to be used for the control other than the superimposition display control. This makes it possible for the graphics-based meter 1 to execute various controls based on the icon image PI.

The vehicle display device according to the present embodiment can display, in execution of the superimposition display control, a superimposed image in which the first image and the second image are synchronized with each other in a case where the preparation period varies in accordance with the processing load at the time of generating the first image. This makes it possible to prevent misalignment between the first image and the second image, leading to achievement of appropriate display of the image.

## Claims

1. A vehicle display device (1) comprising:
a display unit (10) that is installed on a vehicle and displays an image;
a first image signal generation unit (20) that generates a first image signal (sg9) for displaying a first image (P) and that needs a preparation period that varies in accordance with a processing load when generating the first image signal (sg9);
a second image signal generation unit (41) that generates a second image signal (sg11) for displaying a second image (Q);
a display control unit (42) that performs superimposition display control of displaying, on the display unit (10), a superimposed image (PS) obtained by superimposing the second image (Q) on the first image (P) based on the first image signal (sg9) generated by the first image signal generation unit (20) and the second image signal (sg11) generated by the second image signal generation unit (41); and
a control unit (50) that controls the first image signal generation unit (20) and the second image signal generation unit (41) to achieve synchronization between the first image (P) and the second image (Q),
wherein the control unit (50) transmits a first command signal (sg1) to the first image signal generation unit (20) when causing the display control unit (42) to execute the superimposition display control,
the first image signal generation unit (20) receives the first command signal (sg1) from the control unit (50) and then transmits an icon image signal (sg2) for displaying an icon image (PI) to the display control unit (42),
the display control unit (42) controls to display, on the display unit (10), the icon image (PI) based on the icon image signal (sg2) transmitted from the first image signal generation unit (20), and
in the superimposition display control, the first image signal generation unit (20), the second image signal generation unit (41), the display control unit (42), and the control unit (50) control to display, on the display unit (10), the superimposed image (PS) in which the first image (P) according to the first image signal (sg9) generated by the first image signal generation unit (20) and the second image (Q) according to the second image signal (sg11) generated by the second image signal generation unit (41) are synchronized with each other, based on a detection result of the icon image (PI) displayed on the display unit (10).

2. The vehicle display device (1) according to claim 1,
wherein each of the first image (P) and the second image (Q) is a moving image obtained by collecting a plurality of frames of still images,
the first image signal generation unit (20) transmits the first image signal (sg9) to the display control unit (42) after a predetermined period elapses from generation of the icon image signal (sg2),
the display control unit (42) detects the icon image (PI) displayed on the display unit (10) and then transmits a detection result signal (sg5) indicating a detection result to the control unit (50),
the control unit (50) receives the detection result signal (sg5) from the display control unit (42) and then transmits a second command signal (sg10) to the second image signal generation unit (41),
the second image signal generation unit (41) receives the second command signal (sg10) from the control unit (50) and then generates the second image signal (sg11) and transmits the generated second image signal (sg11) to the display control unit, and
the display control unit (42) generates a superimposition image (PS) signal for displaying the superimposed image (PS) having a start frame of the first image (P) and a start frame of the second image (Q) aligned with each other based on the first image signal (sg9) transmitted from the first image signal generation unit (20) and the second image signal (sg11) transmitted from the second image signal generation unit (41), and then displays the superimposed image (PS) on the display unit (10) based on the superimposition image (PS) signal.

3. The vehicle display device (1) according to claim 1 or 2, wherein, in execution of the superimposition display control, the second image signal generation unit (41) suspends transmission of the second image signal (sg11) to the display control unit (42) until the icon image (PI) is detected by the display control unit (42) after the control unit (50) has transmitted the first command signal (sg9) to the first image signal generation unit (20).

4. The vehicle display device (1) according to claim 2, wherein the first image signal generation unit (20) performs, after having detected the icon image (PI) by the display control unit (42), transmission of a non-display signal (sg6) for hiding the icon image (PI) displayed on the display unit (10) to the display control unit (42), and
the display control unit (42) controls to hide the icon image (PI) displayed on the display unit (10) based on the non-display signal (sg6) transmitted from the first image signal generation unit (20).

5. The vehicle display device (1) according to any one of claims 1, 2, and 4, wherein the display unit (10) displays the icon image (PI) in an invisible region (R1), which is invisible from an occupant of the vehicle and is a region in an image display region (R2) in which an image is displayed.
